# EUROPEAN PATENT SPECIFICATION

(11) **EP 1 343 314 B1**
(45) Date of publication and mention of the grant of the patent: **07.01.2015**
(21) Application number: 03003185.0
(22) Date of filing: 19.02.2003
(51) Int. Cl.: G11B 27/034, G11B 27/10, G11B 27/11, G11B 27/32, G11B 27/34, H04N 5/76, H04N 5/781, H04N 5/782, H04N 5/85, H04N 5/907, H04N 9/804

(54) **Video-recording apparatus**
Videoaufnahmegerät
Appareil d'enregistrement vidéo

(30) Priority: 08.03.2002 JP 2002063311
(43) Date of publication of application: 10.09.2003
(73) Proprietor: Panasonic Corporation, Kadoma-shi Osaka 571-8501 (JP)
(72) Inventor: Hatae, Eiichi, Kaho-gun, Fukuoka-Ken, 820-0074 Kaho-Gun (JP); Iwasaki, Shiro, Iizuka-shi, Fukuoka-ken, 820-0054 Iizuka (JP); Yoshida, Hiroyuki, Fukuoka-ken, 811-2401 Kasuya-gun (JP)
(74) Representative: Balsters, Robert

(56) References cited:
- WO-A1-95/31069
- US-A- 5 526 130
- PATENT ABSTRACTS OF JAPAN vol. 2000, no. 09, 13 October 2000 (2000-10-13) & JP 2000 184320 A (NEC CORP), 30 June 2000 (2000-06-30) & EP 1 014 715 A (NEC CORPORATION) 28 June 2000 (2000-06-28)

## Description

The present invention relates to a video-recording apparatus for recording video data onto a recording medium such as a hard disk and an optical magnetic disk. A video-recording apparatus according to the preamble of claim 1 is disclosed in the document JP 2000 184 320.

There is a recent trend in shift of a recording medium in a video-recording apparatus from a sequentially recordable recording medium such as VHS videotape toward a non-volatile recording medium capable of recording video data at random, such as a hard disk, an optical disk, and a flash memory.

In such a video-recording apparatus, a user practices explicit recording of a program, or otherwise timer-controlled recording of the program, thereby allowing the recoding medium to record video data that the user wants. This recording method is herein called "user recording".

Some of the above video-recording apparatus are designed to self-record the video data onto the recording medium without the "user recording". This alternative recording method is herein called "temporary recording".

The temporary recording often records video data obtained by a video data-acquiring unit such as a tuner. Now, assume that the user watches a program when a certain time elapses after the program starts. The use of the temporary recording allows a heading part of the program, which the user missed watching, to be temporarily recorded onto the recording medium. Consequently, the user can watch the missed part of the program later. This functionality is referred to as a near-video-on-demand function. The near-video-on-demand function may be added to the video-recording apparatus to provide improved convenience of the user.

However, the recording medium has a limited recording capacity. Therefore, the continued temporary recording results in shortage of the recording capacity of the recording medium. As a result, further temporary recoding must be stopped.

A prior art addressing such shortcomings is disclosed in the published Japanese Patent Applications Laid-out Nos. 7-135632 and 2000-184320.

According to the prior art as mentioned above, however, the recording medium is distinctly divided into two parts, i.e., temporary recording and user recording areas.

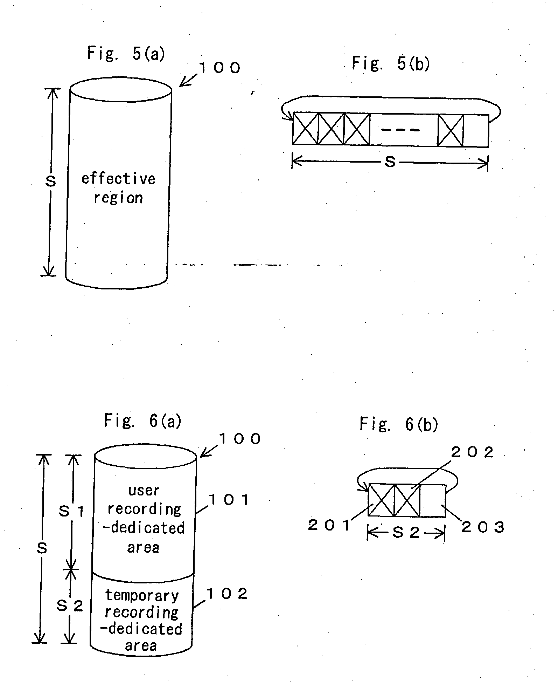

Fig. 6 (a) is a simulated illustration, showing a relationship between the temporary recording and user recording areas. In Fig. 6 (a), the recording medium has an effective region 100 (size "S") divided into a user recording-dedicated area 101 (size "S1") and a temporary recording-dedicated area 102 (size "S2"), where S = S1 + S2.

As illustrated in Fig. 6 (b), the temporary recording-dedicated area 102 forms a roll buffer. In the roller buffer as illustrated in Fig. 6 (b), video data have already temporarily been recorded on first and second segments 201, 202, but a third segment 203 is vacant.

In this situation, the next video data to be temporarily recorded are recorded onto the third segment 203, and the roll buffer becomes full of the video data. The subsequent video data to be temporarily recorded thereafter are overwritten onto the first segment 201. As a result, the old video data present in the first segment 201 until the new video data is overwritten thereon are lost.

As discussed above, the areas 101, 102 are fixedly and distinctly divided. The size "S2" (= S - S1) of the temporary recording-dedicated area 102 is pressed by the size "S1" of the user recording-dedicated area 101. As a result, the roller buffer tends to suffer from capacity shortage.

Even when the user recording-dedicated area 101 has a sufficient space to store the temporarily recorded video data, the temporarily recorded video data cannot be recorded onto the user recording-dedicated area 101, instead of being recorded onto the temporary recording-dedicated area 102 that is full with the data. Such an inconvenience makes it difficult to effectively use the entire size "S" of the effective region 100.

More specifically, there is a problem of a reduction in temporarily recordable time with reference to size "S".

According to the prior art, the temporarily recorded video data and user-recorded video data are differentiated from one another, depending upon regions where these two different video data are recorded. For example, when the user wants to convert the temporarily recorded video data into the user-recorded video data in order to treat the temporarily recorded video data as user-recorded video data, then the only thing that the user can do is to forcedly move the temporarily recoded video data from the temporary recording-dedicated area 102 to the user recording-dedicated area 101. In short, a problem associated with the prior art is that the video data is complicated and difficult to handle.

As a consequence, such a change in handling the video data is virtually impossible to make, unless the video-recording apparatus is provided with a user interface for supporting the area-to-area movement of the video data.

In view of the above, an object of the present invention is to provide a video-recording apparatus operable to effectively use the entire recording medium to provide a longer temporary recordable time, and operable to flexibly treat video data.

A first aspect of the present invention provides a video-recording apparatus as defined in claim 1 and comprising: a read-write unit operable to both read and write the data to a recording medium; a video data-acquiring unit operable to acquire video data; an input unit operable to receive input from a user; and a control unit operable to control the read-write unit, the video data-acquiring unit, and the input unit, in which the control unit permits the read-write unit to execute user recording when a user recording condition specified through the input unit is satisfied, but unless otherwise the control unit permits the read-write unit to temporarily record the video data obtained by the vide data-acquiring unit, wherein video data obtained by the user recording and video data obtained by temporary recording are recorded on the recording medium at the same region of the recording medium, the video data recorded on the recording medium are managed in accordance with attribution information associated with the video data, and wherein the attribute information includes identification information that distinguishes the video data obtained by the user recording from the video data obtained by the temporary recording.

In the above structure, the video data obtained by the user recording and that obtained by the temporary recording are recorded on the recording medium at the same region thereof. As a result, when a void space is present in the region, then the video data obtained by the temporary recording can continuously be recorded. This feature achieves effective use of the recording medium, thereby providing a longer temporarily recordable time.

As discussed above, the video data obtained by the user recording and that obtained by the temporary recording are recorded on the recording medium at the same region thereof. This feature eliminates the need to move the video data to another region of the recoding medium, and consequently achieves flexible handling of the video data.

A 2nd aspect of the present invention provides a video-recording apparatus as defined in the second aspect of the present invention, further comprising: a compression unit disposed between the video data-acquiring unit and the read-write unit, the compression unit being operable to compress the video data acquired by the video data-acquiring unit, and to feed the compressed video data into the read-write unit.

The above structure is capable of recording compressed and smaller-sized video data onto the recording medium. This feature realizes further effective use of the recording medium.

As a result, referencing such identification information contained in the attribute information distinctly differentiates the video data obtained by the user recording from the video data obtained by the temporary recording, although these two different video data are recorded and scattered in the recording medium at the same region thereof.

A 3rd aspect of the present invention provides a video-recording apparatus as defined in the fourth aspect of the present invention, wherein the identification information can be rewritten by input from the user through the input unit.

As a result, the video data obtained by the user recording and the video data obtained by the temporary recording are interchangeable according to user's requests.

The video data are usually large in size. According to the present invention, such large-sized video data need not be changed at all. Accordingly, rewriting the identification information that is considerably smaller in size than the video data is an easy job for the video-recording apparatus. As a result, the user can accomplish a purpose merely by practicing such easy processing.

A 4th aspect of the present invention provides a video-recording apparatus as defined in the second aspect of the present invention, wherein the control unit permits the read-write unit to practice reduction processing to reduce an information quantity of the video data recorded on the recording medium when the recording medium runs out of a void recording space, and when a predetermined condition is satisfied.

The above structure allows the video data to be recorded without a reduction in the video data when the recording medium has a sufficient void space, and further allows new video data to be recorded by reducing the video data on the recording medium when the recording medium runs out of the void space.

A 5th aspect of the present invention provides a video-recording apparatus as defined in the sixth aspect of the present invention, wherein the reduction processing reduces the video data obtained by the temporary recording in preference to the video data obtained by the user recording.

As a result, the video data obtained by the user recording can be protected.

An 6th aspect of the present invention provides a video-recording apparatus as defined in the sixth aspect of the present invention, wherein the attribute information includes earlier and later recoding time of the video data, and wherein the reduction processing reduces video data having the later recording time in preference to video data having the earlier recording time.

As a result, old, non-fresh pieces of video data are usually reduced in sequence, thereby allowing new video data to be recorded on the recording medium.

A 7th aspect of the present invention provides a video-recoding apparatus as defined in the sixth aspect of the present invention, wherein the reduction processing is executed on a program basis.

As a result, the video data can conveniently be reduced for each program.

An 8th aspect of the present invention provides a video-recoding apparatus as defined in the sixth aspect of the present invention, wherein the reduction processing is executed on a partial program basis.

The above structure provides video data having part of the program remaining recorded.

A 9th aspect of the present invention provides a video-recording apparatus as defined in the sixth aspect of the present invention, wherein the attribute information includes protection information to both prohibit and allow the reduction processing of the video data, the protection information being rewritable according to input from the user through the input unit, and wherein video data having the protection information to prohibit the reduction processing is never reduced.

As a result, the user can save important video data for a long time by specifying the protection information.

A 10th aspect of the present invention provides a video-recording apparatus as defined in the sixth aspect of the present invention, wherein the reduction processing deletes the video data.

As a result, the video data are sequentially deleted, thereby providing an enlarged void space in the recording medium.

An 11th aspect of the present invention provides a video-recording apparatus as defined in the sixth aspect of the present invention, wherein the reduction processing compresses the video data at a ratio greater than that of the video data that are stored at present.

As a result, the compressed and smaller-sized video data provides a void space in the recording medium. In addition, the compression of the video data allows the user to ascertain what the compressed video data contains.

A 12th aspect of the present invention provides a video-recording apparatus as defined in the fourth aspect of the present invention, wherein the attribute information is retained in a table different from the video data.

The above structure realizes easy, high-speed search and edit of the attribute information.

A 13th aspect of the present invention provides a video-recording apparatus as defined in the fourth aspect of the present invention, wherein the attribute information is retained as a header of the video data.

As a result, the video data and the attribute information can unitarily be treated.

The above, and other objects, features and advantages of the present invention will become apparent from the following description read in conjunction with the accompanying drawings, in which like reference numerals designate the same elements.
Fig. 1 is a block diagram, illustrating a video-recording apparatus according to an embodiment of the present invention;
Fig. 2 (a) is a descriptive illustration, showing a recoding medium for use in the video-recording apparatus;
Fig. 2 (b) is an exemplified illustration, showing a table for retaining attribute information;
Fig. 2 (c) is an illustration, showing a data structure that comprises the attribute information and video data;
Fig. 3 is a flowchart, showing how the video-recording apparatus is operated;
Fig. 4 is a flowchart, illustrating how recording processing is practiced;
Fig. 5 (a) is a descriptive illustration, showing a region of the recording medium;
Fig. 5 (b) is a simulated illustration, showing a roll buffer;
Fig. 6 (a) is descriptive illustration, showing a region of a prior art recording medium; and
Fig. 6 (b) is a simulated illustration, showing a prior art roller buffer.

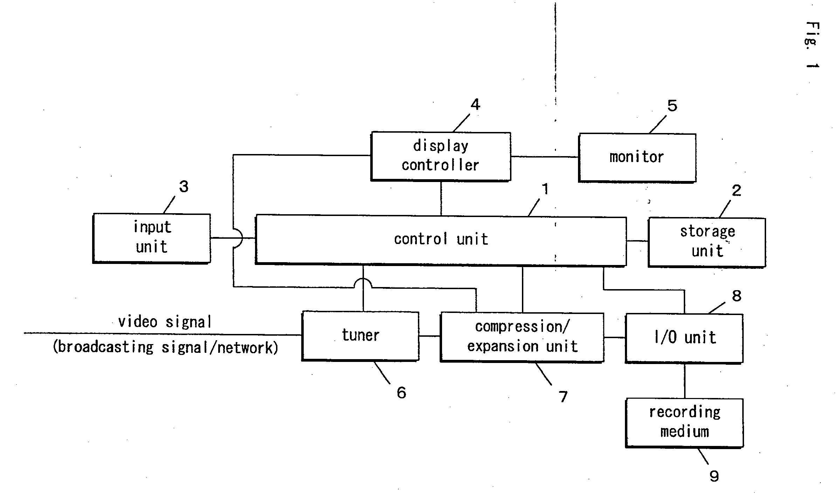

An embodiment of the present invention will now be described with reference to the drawings. Fig. 1 is a block diagram, illustrating an exemplary video-recording apparatus according to an embodiment of the present invention.

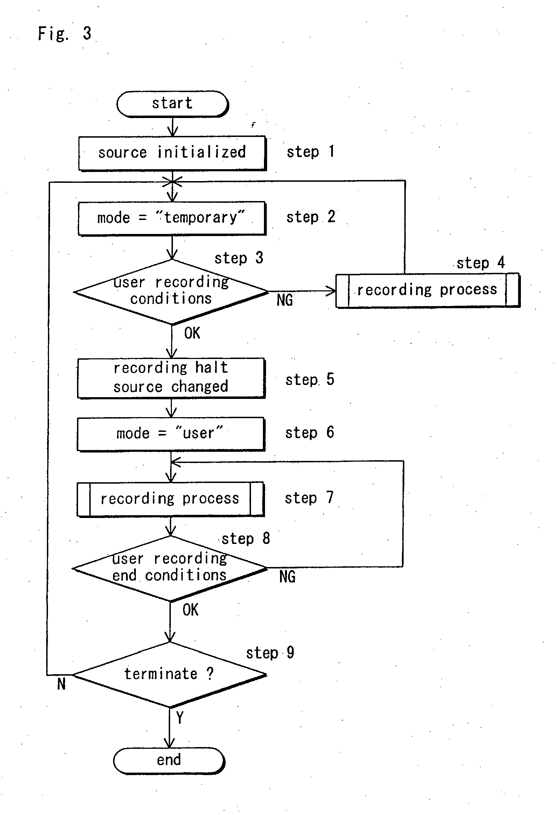

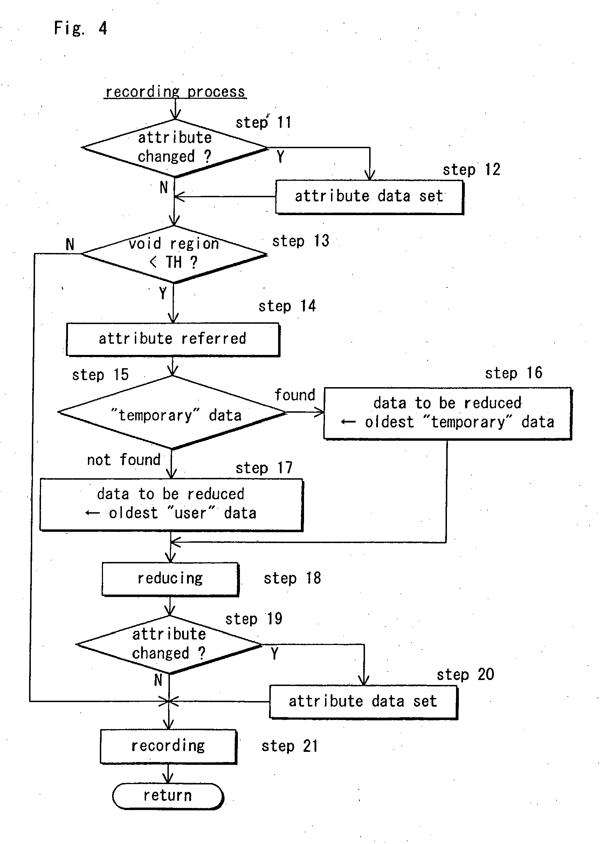

In Fig. 1, a control unit 1 includes a CPU (central processing unit) and a ROM (read only memory). The CPU controls components as illustrated in Fig. 1. The ROM stores a program according to flowcharts of Figs. 3 and 4. The CPU executes the program.

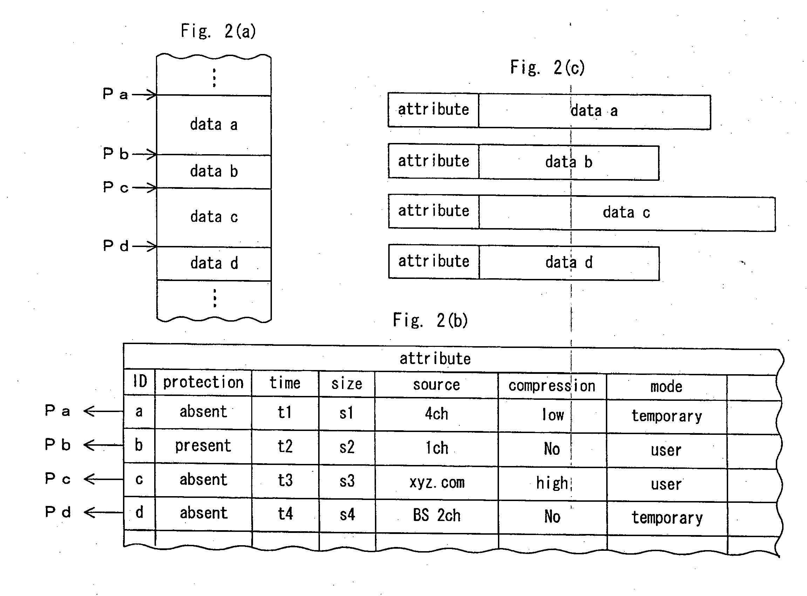

A storage unit 2 includes a RAM (random access memory). The storage unit 2 is provided with an area in which information required to allow the control unit 1 to execute processing is temporarily stored. The storage unit 2 contains an attribute information table as illustrated in Fig. 2 (b). Part of the storage unit 2 may be used as a cache of a recording medium 9.

An input unit 3 includes a keyboard and a remote controller. The input unit 3 receives input from a user. The user's input entered from the input unit 3 includes user's explicit video-recording operations, user's timer-controlled recording operations, and other user's operations. The user's timer-controlled recording operations may be the inputting of source information such as channels and a recording start-end time. The user's timer-controlled recording operations further may be the specifying of programs using an either G-code or EPG information. In particular, according to the present embodiment, the user can enter attribute information and a change in the attribute information using the input unit 3. The attribute information will be discussed later.

A display controller 4 and a monitor 5 may be separated from the video-recording apparatus. Video data either fed from a tuner 6 or read out from the recording medium 9 is entered into a compression-expansion unit 7 to regenerate the video data. The display controller 4 receives image data from the compression-expansion unit 7. The video data includes a plurality of types of image data. Such image data may be of an either field or frame structure. The display controller 4 feeds a video signal into the monitor 5. The monitor 5 is a display device such as a cathode-ray tube, a LCD, or a plasma display, and displays a picture to the user in accordance with the received video signal.

The tuner 6 corresponds to a video data-acquiring unit for acquiring the video data. The tuner 6 obtains the video data via an either broadcasting signal or network.

The compression-expansion unit 7 has a compression unit positioned between the video data-acquiring unit (the tuner 6) and a read-write unit (an I/O unit 8). The compression unit functions as a data-compressing unit for compressing the video data. According to the present embodiment, the compression-expansion unit 7 compresses and expands the video data in accordance with MPEG specifications, but may alternatively processes the video data in accordance with other systems. The data-compressing unit may be omitted when no video data must be compressed and when pre-compressed video data are used.

The I/O unit 8 works as the read-write unit for both reading and writing the video data to the recording medium 9.

The recording medium 9 is a non-volatile medium such as a hard disk, an optical disk, and a flash memory. The video data can be read and written to the recording medium 9 at random. The recording medium 9 is desirably formed to work as a series of storage areas when being viewed from the control unit 1. Accordingly, the recording medium 9 may be, e.g., a combination of the hard disk and the optical disk. However, in order to form the recording medium 9 in combination of mediums having different access speeds, the recording medium 9 is desirably provided with a cache for absorbing a difference in access speed.

The following discusses with reference to Fig. 2 the way in which the video data are recorded when being viewed from the control unit 1, and the way in which the attribute information is constructed.

As previously discussed, the recording medium 9 can be treated as a series of storage areas when being viewed from the control unit 1. For example, as illustrated in Fig. 2 (a), successive pieces of video data such as data "a", "b", "c", "d" etc. are recorded on the recording medium 9. The data "a", "b", "c", "d" etc. may be video data obtained by user recording, or otherwise may be video data obtained by temporary recording, or alternatively may be a combination of these two different video data.

This means that respective pieces of video data obtained by the user recording and the temporary recording are recorded over the same successive regions. In general, the video data obtained by the user recording and that obtained by the temporary recording are recorded and scattered in random order. As shown in Fig. 2 (a), "pa", "pb", "pc", and "pd" are pointers that point respective heads of the data "a", "b", "c", and "d".

The attribute information is managed in accordance with a table as illustrated in Fig. 2 (b). In Fig. 2 (b), fields such as ID, protection, time, size, source, compression, mode, etc. are defined as attributes.

The "ID" field provides an identifier of each piece of the video data. The "ID" field comprises names such as "a", "b", "c", "d", etc. and pointers "pa", "pb", "pc", "pd", etc. The control unit 1 in receipt of any ID is free to access a corresponding piece of video data in the recording medium 9 through the I/O unit 8. Since the distinguishment of the video data using the ID is all that is actually required, the ID's are desirably defined to allow the control unit 1 to establish a unique relationship to each piece of the video data.

The "mode" field provides a flag showing either the video data obtained by the temporary recording (a "temporary" mode) or that obtained by the user recording (a "user" mode). The control unit 1 differentiates each piece of the video data in accordance with the flag, thereby making it possible to recognize that the video data is obtained by either the temporary recording or the user recording.

When the user wants to treat temporarily recorded video data as video data manually recorded by the user, or on the contrary, the user should rewrite the flag of the video data and need not to process the video data itself as illustrated in Fig. 2 (a) at all. In this instance, the user can rewrite the flag using the input unit 3. As a consequence, the user can accomplish a purpose with ease. In addition, the video-recording apparatus can complete processing with very ease at very high speed because rewriting the flag is all that is required. That is, heavily loaded processing such as movement of larger-sized video data is not required.

The protection field comprises two different flags that show "present" and "absent". When the protection field shows "present", then a reduction in the video data having such a protection filed is prohibited. Conversely, the reduction is allowed when the video data has the protection field showing "absent".

The time field provides data on a video recording start time. The data is specified on a, e.g., second time basis.

The size field provides data on a size of the video data. The data is specified on a, e.g., byte basis.

The source field provides data on a place where the video data is obtained. For example, video data having an ID of "a" is shown obtained by the tuner 6 from a fourth channel of broadcast waves. Video data having an ID of "c" is shown obtained from a certain web site on the Internet. An address of the web site on the Internet is recorded at the source field.

The compression field provides data on how much the video data is compressed. The compression field according to the present embodiment provides three different values, i.e., "No" (not compressed), "low" (lightly compressed), and "high" (highly compressed). This is merely an example, and such compression values may be expressed using other indexes.

Any of the above field values may be omitted if needed. Alternatively, the attribute information may include further fields. The order of the fields, of course, may be changed when necessary.

The user can edit the field values using the input unit 3. At this time, the data as illustrated in Fig. 2 (b) may be tabulated as a user interface. Such a tabulated user interface as one example may be provided in a manner nearly the same as Fig. 2 (b). Accordingly, a drawing showing the tabulated user interface is herein omitted in order to avoid duplicated drawings.

The control unit 1 produces image data from the table of Fig. 2 (b) in accordance with the attribute information as illustrated in Fig. 2 (b). The storage unit 2 stores the attribute information. The control unit 1 allows the monitor 5 to display the produced image data to the user through the display control unit 4.

As illustrated in Fig. 2(c), a file or stream provided with header and data sections may be used as an alternative to Fig. 2 (b). The header section contains the attribute information. The data section contains a data entity from the video data. This alternative provides easy handling because the video data and attribute information can be duplicated and/or moved together when the video data is duplicated and/or moved from the recording medium 9 to another recording medium.

Meanwhile, the management of the attribute information using the table as illustrated in Fig. 2 (b) completes processing with easy at high speeds when the control unit 1 searches the storage unit 2 for required information in the attribute information, when the control unit 1 edits a particular field of the attribute information, and when the control unit 1 provides access to video data having a particular ID.

The following discuses with reference to Figs. 3 and 4 how the video-recording apparatus constructed as above will be operated.

At step 1 of Fig. 3, when the video-recording apparatus is activated, then the control unit 1 initializes a source, from which the tuner 6 obtains the video data. In this instance, the source may be a source that was being watched immediately before electric power to the video-recording apparatus is shut off.

The tuner 6 obtains the video data from the initialized source, and then starts to deliver the obtained video data to the compression-expansion unit 7.

The control unit 1 reserves a "mode" ("temporary" or "user") storing area in the storage unit 2 at a particular region thereof in order to differentiate the temporary recording from the user recording.

At step 2, the control unit 1 sets a mode value of the storage unit 2 into the "temporary" mode. The video-recording apparatus starts to execute the temporary recording.

At step 3, the control unit 1 checks user recording conditions to see whether these conditions are fulfilled. The user can enter the user recording conditions using the input unit 3. The user recording conditions include the practicing of explicit recording operations or the satisfying of timer-controlled recording conditions.

When the user recording conditions are unsatisfied, then the routine is moved to step 4, at which recording processing as discussed later in detail is practiced as illustrated in Fig. 4. However, the recording processing addresses the temporary recording.

When the recording processing at step 4 is completed, then the routine is returned to step 2, at which the control unit 1 starts the processing. This means that the temporary recording according to step 4 is continuously performed while the user recording conditions remain unsatisfied at step 3. As a result, a series of video data obtained by the temporary recording are sequentially accumulated in the recording medium 9.

Meanwhile, when the user recording conditions are satisfied at step 3, then the control unit 1 practices user recording processing according to step 5 to step 8 as described below.

At step 5, the control unit 1 stops further temporary recording, and then changes the source, from which the tuner 6 obtains the video data, to a source specified by the user.

At step 6, the control unit 1 sets the mode value of the storage unit 2 into the "user" mode. At step 7, the control unit 1 starts to execute the recording processing as illustrated in Fig. 4. Different from the recording processing at step 4, the recording processing at step 7 handles the user recording.

At step 8, the control unit 1 checks user-recording end conditions to see whether such conditions are fulfilled. The user-recording end conditions include the end of a program specified by the explicit recording operations and the reaching of a recording end time specified by the timer-controlled recording conditions.

When the determination in step 8 results in a negative answer, then the routine is returned to step 7, at which the control unit 1 practice the processing. Consequently, the user recording according to step 7 is continuously practiced while the user-recording end conditions remain unsatisfied. As a result, a series of video data obtained by the user recording are sequentially accumulated in the recording medium 9.

When the user-recording end conditions are fulfilled at step 8, then at step 9, the control unit 1 ascertains that there are no instructions to terminate the operations, and then the routine is returned to step 2, at which the control unit 1 starts to practice the temporary recording.

The following discusses with reference to Fig. 4 the way in which the recording processing is practiced at steps 4 and 7.

As illustrated by step 11 of Fig. 4, the control unit 1 checks the attributes, i.e., the values in the fields as shown in Fig. 2 (b), before starting the recording processing, in order to see whether there is a change in the attributes.

When there is a change in the attributes, then at step 12, the control unit 1 sets a value to a corresponding field of the attribute information associated with the video data.

According to the present embodiment, as to a program that the user watches through the monitor 5, the control unit 1 puts "present" into the protection field associated with video data obtained by temporarily recording the program.

Consequently, the video data obtained by temporarily recording the program that the user is watching at present is excluded from data to be reduced as discussed later. This feature protects a heading program portion that the user missed watching, when the user watches a program that was already started to broadcast. As a result, the user can enjoy a near-video-on-demand function, thereby providing improved convenience.

At step 13 of Fig. 4, the control unit 1 checks the recording medium 9 to see whether the recording medium 9 has a sufficient void region.

According to the present embodiment, threshold value "TH" is predetermined. The control unit 1 compares threshold value "TH" with a size of the void region. When the void region is less in size than threshold value "TH", then the control unit 1 determines that the void region in the recording medium 9 is insufficient. Unless otherwise, the control unit 1 determines that a sufficient void region is available in the recording medium 9.

When the recording medium 9 has such a sufficient void region, then the routine is advanced to step 21, at which the control unit 1 continues to execute the recording processing.

When the recording medium 9 runs short of a void region, then the control unit 1 practices processing according to steps 14 and greater. More specifically, at step 14, the control unit 1 references the attribute information to select video data to be reduced. In such a selection, video data having the protection field named as being "present" are counted out from the video data reduction.

At step 15, the control unit 1 checks a gang of video data to examine whether there is video data in the "temporary" mode. When the video data in the "temporary" mode is found to be present, then at step 16, the control unit 1 selects the oldest, non-fresh video data from among the "temporary" mode video data, and then sets the selected data as video data to be reduced.

When no "temporary" mode video data is found at step 15, then at step 17, the control unit 1 selects video data obtained by the user recording to set the selected data as video data to be reduced. In this instance, the oldest, non-fresh video data among the selected data is preceded as the video data to be reduced.

In this way, the control unit 1 selects the video data to be reduced. According to the present embodiment, the video data obtained by the temporary recording are reduced in preference to the video data obtained by the user recording. In addition, later recorded video data are reduced in preference to earlier recorded video data.

At step 18, the video data to be reduced as mentioned above is reduced. The video data to be reduced may be reduced on a program basis, or otherwise may be reduced on a partial program basis (e.g., on the basis of the number of certain flames).

Alternatively, the video data to be reduced may be deleted. Consequently, all of the video data to be reduced may sequentially be deleted. As a result, the recording medium 8 can have an enlarged void space. In this instance, the attribute information of the deleted video data is, of course, deleted as well.

As a further alternative, the video data to be reduced may be compressed at a ratio higher than that of the video data stored at present. As a result, the compressed video data is reduced in size, thereby providing a void space in the recording medium 9. The compression of the video data allows the user to ascertain what the compressed video data contains.

The attribute information of the compressed video data is not deleted. At this time, the compression field of the attribute information has values varied from "No" to "low" and from "low" to "high".

The compression as discussed above includes logical video data compression other than physical video data compression. More specifically, in the theoretical compression, the video data is erased, but information to re-obtain the video data is left available. In this instance, the source field of the attribute information contains data on a position where the video data is re-obtainable. For example, an URL on the Internet, or otherwise a position where an either storage service or a download service is available may be filled in at the source field.

As a yet further alternative, the video data to be reduced may be reduced in combination of deletion and compression.

When the reduction as discussed above is completed, then at step 19, the control unit 1 checks the reduced video data to see whether the attributes of the reduced video data remain unchanged. In general, the attributes of the reduced video data are varied. When there is a change in the attributes, then at step 20, the control unit 1 places such a change into the attribute information.

When the above processing is completed, then the routine is moved to the next step from the recording processing while the control unit 1 continue to execute the recording processing at step 21

The following simulatively discusses with reference to Fig. 5 the way in which the video data are treated according to the present embodiment.

Fig. 5 (a) corresponds to Fig. 6(a) that shows the prior art. Similarly, Fig. 5 (b) corresponds to Fig. 6 (b).

As illustrated in Fig. 5 (a), according to the present embodiment, an effective region 100 comprises a series of recording areas. The video data obtained by the temporary recording and that obtained by the user recording are recorded and scattered in the same area "S".

Although such two different types of video data are stored and mixed together in the same region, the attribute information as shown in Fig. 2 (b) immediately differentiates the video data obtained by the temporary recording from that obtained by the user recording.

As illustrated in Fig. 5 (b), a large-sized roller buffer covers the entire area of the effective region 100 (size "S"), and consequently the roller buffer has a size equal to the size "S" of the effective region 100.

As evidenced by a comparison of Fig. 5 (b) with Fig. 6 (b), pursuant to the present embodiment, the recording medium 9 can store a large volume of video data by using the effective region 100 of the recording medium 9 to the greatest extent possible. In other words, size "S" provides a temporarily recordable time considerably greater than that obtained according to the prior art.

Pursuant to the present invention, the video data obtained by the temporary recording and that obtained by the user recording are recorded on the recoding medium at the same region thereof. This feature achieves the efficient use of the recording medium, and realizes recording that meets requirements of the user.

In addition, the video data obtained by the user recording as well as that obtained by the temporary recording may be reduced when the recording medium runs out of a recording capacity. This feature allows a newer program to be recorded, and realizes recording that satisfies the requirements of the user.

Furthermore, the user can convert between the video data obtained by the temporary recoding and that obtained by the user recording by changing the attribute information. This feature provides easy data management.

Moreover, the protection data of the attribute information protects video data that the user wants to save. This feature realizes program accumulation that the meets the requirements of the user.

Furthermore, pursuant to the present invention, the video data that the user is watching is never reduced. This feature allows the user to retroactively re-watch a picture that is being replayed at present.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A video-recording apparatus comprising
a read-write unit (8) operable to both read and write the data to a recording medium (9);
a video data-acquiring unit (6) operable to acquire video data;
an input unit (3) operable to receive input from a user; and
a control unit (1) operable to control said read-write unit (8), said video data-acquiring unit (6), and said input unit (3), in which said control unit (1) permits said read-write unit (8) to execute user recording when a user recording condition specified through said input unit (3) is satisfied, but unless otherwise said control unit (1) permits said read-write unit (8) to temporarily record the video data obtained by said vide data-acquiring unit (6),
wherein video data obtained by the user recording and video data obtained by temporary recording are recorded on said recording medium (9) at the same region (100) of said recording medium (9),
**characterized in that**
said control unit is operable to manage the video data recorded on said recording medium (9) in accordance with attribution information associated with the video data, and wherein the attribute information includes identification information that distinguishes the video data obtained by the user recording from the video data obtained by the temporary recording, and
wherein the identification information can be rewritten by input from the user through said input unit (3).

2. A video-recording apparatus as defined in claim 1, further comprising:
a compression unit (7) disposed between said video data-acquiring unit (6) and said read-write unit (8), said compression unit (7) being operable to compress the video data acquired by the video data-acquiring unit (6), and to feed the compressed video data into said read-write unit (8).

3. A video-recording apparatus as defined in claim 1, wherein said control unit (1) permits said read-write unit (8) to practice reduction processing to reduce an information quantity of the video data recorded on said recording medium (9) when said recording medium (9) runs out of a void recording space, and when a predetermined condition is satisfied.

4. A video-recording apparatus as defined in claim 3, wherein the reduction processing reduces the video data obtained by the temporary recording in preference to the video data obtained by the user recording.

5. A video-recording apparatus as defined in claim 3, wherein the attribute information includes earlier and later recording time of the video data, and wherein the reduction processing reduces video data having the later recording time in preference to video data having the earlier recording time.

6. A video-recoding apparatus as defined in claim 3, wherein the reduction processing is executed on a program basis.

7. A video-recoding apparatus as defined in claim 3, wherein the reduction processing is executed on a partial program basis.

8. A video-recording apparatus as defined in claim 3, wherein the attribute information includes protection information to both prohibit and allow the reduction processing of the video data, the protection information being rewritable according to input from the user through said input unit (3), and wherein video data having the protection information to prohibit the reduction processing are never reduced.

9. A video-recording apparatus as defined in claim 3, wherein the reduction processing deletes the video data.

10. A video-recording apparatus as defined in claim 3, wherein the reduction processing compresses the video data at a ratio greater than that of the video data that are stored at present.

11. A video-recording apparatus as defined in claim 1, wherein the attribute information is retained in a table different from the video data.

12. A video-recording apparatus as defined in claim 1, wherein the attribute information is retained as a header of the video data.

## Patentansprüche

1. Videoaufnahmegerät, aufweisend:
eine Lese-Schreib-Einheit (8), operabel zum Lesen und zum Schreiben der Daten von einem bzw. auf ein Aufnahmemedium (9);
eine Videodaten-Erfassungseinheit (6), operabel zum Erfassen von Videodaten;
eine Eingabeeinheit (3), operabel für Empfang einer Eingabe von einem Anwender; und
eine Steuereinheit (1), operabel zum Steuern der Lese-Schreib-Einheit (8), der Videodaten-Erfassungseinheit (6) und der Eingabeeinheit (3), wobei die Steuereinheit (1) der Lese-Schreib-Einheit (8) ein Ausführen einer Anwenderaufnahme gestattet, wenn eine von der Eingabeeinheit (3) spezifizierte Anwenderaufnahmebedingung erfüllt ist, sofern nicht die Steuereinheit (1) der Lese-Schreib-Einheit (8) eine vorübergehende Aufnahme der durch die Videodaten-Erfassungseinheit (6) erhaltenen Videodaten gestattet,
wobei durch die Anwenderaufnahme erhaltenen Videodaten und durch vorübergehendes Aufnehmen erhaltene Videodaten auf dem Aufnahmemedium (9) auf dem gleichen Bereich (100) des Aufnahmemediums (9) aufgenommen werden,
**dadurch gekennzeichnet, dass**
die Steuereinheit operabel für ein Verwalten der auf dem Aufnahmemedium (9) in Übereinstimmung mit den Videodaten zugeordneter Zuschreibungsinformation, und wobei die Zuschreibungsinformation Identifikationsinformation enthält, die die von der Anwenderaufnahme erhaltenen Videodaten von den durch die vorübergehende Aufnahme erhaltenen Videodaten unterscheidet, und
wobei die Identifikationsinformation durch Eingabe des Anwenders durch die Eingabeeinheit (3) überschrieben werden kann.

2. Videoaufnahmegerät nach Anspruch 1, ferner aufweisend:
eine Kompressionseinheit (7), angeordnet zwischen der Videodaten-Erfassungseinheit (6) und der Lese-Schreib-Einheit (8), wobei die Kompressionseinheit (7) operabel für ein Komprimieren der von der Videodaten-Erfassungseinheit (6) erfassten Videodaten und ein Speisen der komprimierten Videodaten in die Lese-Schreib-Einheit (8) ist.

3. Videoaufnahmegerät nach Anspruch 1, wobei die Steuereinheit (1) der Lese-Schreib-Einheit (8) ein Ausführen einer Reduktionsverarbeitung zur Reduzierung einer Informationsmenge von den auf dem Aufnahmemedium (9) aufgenommenen Videodaten gestattet, wenn das Aufnahmemedium (9) einen leeren Aufnahmeplatz verlässt und wenn eine im Voraus bestimmte Bedingung erfüllt ist.

4. Videoaufnahmegerät nach Anspruch 3, wobei die Reduktionsverarbeitung die bei der vorübergehenden Aufnahme erhaltenen Videodaten bevorzugt vor den durch die Anwenderaufnahme erhaltenen Videodaten reduziert.

5. Videoaufnahmegerät nach Anspruch 3, wobei die Zuschreibungsinformation frühere und spätere Aufnahmezeit der Videodaten umfasst, und wobei die Reduktionsverarbeitung Videodaten mit späterer Aufnahmezeit bevorzugt vor Videodaten mit früherer Aufnahmezeit reduziert.

6. Videoaufnahmegerät nach Anspruch 3, wobei die Reduktionsverarbeitung auf einer Programmbasis ausgeführt wird.

7. Videoaufnahmegerät nach Anspruch 3, wobei die Reduktionsverarbeitung auf einer teilweisen Programmbasis ausgeführt wird.

8. Videoaufnahmegerät nach Anspruch 3, wobei die Zuschreibungsinformation Schutzinformation sowohl zum Verbieten als auch zum Gestatten der Reduktionsverarbeitung der Videodaten umfasst, wobei die Schutzinformation entsprechend einer Eingabe durch den Anwender über die Eingabeeinheit (3) überschreibbar ist, und wobei Schutzinformation zum Verbieten der Reduktionsverarbeitung enthaltende Videodaten nie reduziert werden.

9. Videoaufnahmegerät nach Anspruch 3, wobei die Reduktionsverarbeitung die Videodaten löscht.

10. Videoaufnahmegerät nach Anspruch 3, wobei die Reduktionsverarbeitung die Videodaten in einem Verhältnis komprimiert, das größer ist als das der gegenwärtig gespeicherten Videodaten.

11. Videoaufnahmegerät nach Anspruch 1, wobei die Zuschreibungsinformation in einer Tabelle gehalten wird, die sich von den Videodaten unterscheidet.

12. Videoaufnahmegerät nach Anspruch 1, wobei die Zuschreibungsinformation als ein Header der Videodaten gehalten wird.

## Revendications

1. Appareil d'enregistrement vidéo comprenant
une unité de lecture-écriture (8) pouvant fonctionner pour, à la fois, lire et écrire les données sur un support d'enregistrement (9) ;
une unité d'acquisition de données vidéo (6) pouvant fonctionner pour acquérir des données vidéo ;
une unité d'entrée (3) pouvant fonctionner pour recevoir une entrée d'un utilisateur ; et
une unité de commande (1) pouvant fonctionner pour commander ladite unité de lecture-écriture (8), ladite unité d'acquisition de données vidéo (6), et ladite unité d'entrée (3), où ladite unité de commande (1) permet à ladite unité de lecture-écriture (8) d'exécuter un enregistrement utilisateur lorsqu'une condition d'enregistrement utilisateur spécifiée par ladite unité d'entrée (3) est satisfaite, mais sauf indication contraire ladite unité de commande (1) permet à ladite unité de lecture-écriture (8) d'enregistrer temporairement les données vidéo obtenues par ladite unité d'acquisition de données vidéo (6),
dans lequel des données vidéo obtenues par l'enregistrement utilisateur et des données vidéo obtenues par un enregistrement temporaire sont enregistrées sur ledit support d'enregistrement (9) à la même région (100) dudit support d'enregistrement (9),
**caractérisé en ce que**
ladite unité de commande peut fonctionner pour gérer les données vidéo enregistrées sur ledit support d'enregistrement (9) conformément à des informations d'attribution associées aux données vidéo, et
dans lequel les informations d'attribut comportent des informations d'identification qui distinguent les données vidéo obtenues par l'enregistrement utilisateur des données vidéo obtenues par l'enregistrement temporaire, et
dans lequel les informations d'identification peuvent être réécrites par une entrée de l'utilisateur à travers ladite unité d'entrée (3).

2. Appareil d'enregistrement vidéo tel que défini dans la revendication 1, comprenant en outre :
une unité de compression (7) disposée entre ladite unité d'acquisition de données vidéo (6) et ladite unité de lecture-écriture (8), ladite unité de compression (7) pouvant fonctionner pour compresser les données vidéo acquises par l'unité d'acquisition de données vidéo (6), et pour introduire les données vidéo compressées dans ladite unité de lecture-écriture (8).

3. Appareil d'enregistrement vidéo tel que défini dans la revendication 1, dans lequel ladite unité de commande (1) permet à ladite unité de lecture-écriture (8) de pratiquer un traitement de réduction pour réduire une quantité d'informations des données vidéo enregistrées sur ledit support d'enregistrement (9) lorsque ledit support d'enregistrement (9) n'a plus d'espace d'enregistrement vide, et lorsqu'une condition prédéterminée est satisfaite.

4. Appareil d'enregistrement vidéo tel que défini dans la revendication 3, dans lequel le traitement de réduction réduit les données vidéo obtenues par l'enregistrement temporaire, de préférence aux données vidéo obtenues par l'enregistrement utilisateur.

5. Appareil d'enregistrement vidéo tel que défini dans la revendication 3, dans lequel les informations d'attribut comportent une durée d'enregistrement antérieure et postérieure des données vidéo, et dans lequel le traitement de réduction réduit des données vidéo ayant la durée d'enregistrement postérieure, de préférence à des données vidéo ayant la durée d'enregistrement antérieure.

6. Appareil d'enregistrement vidéo tel que défini dans la revendication 3, dans lequel le traitement de réduction est exécuté sur une base de programme.

7. Appareil d'enregistrement vidéo tel que défini dans la revendication 3, dans lequel le traitement de réduction est exécuté sur une base de programme partielle.

8. Appareil d'enregistrement vidéo tel que défini dans la revendication 3, dans lequel les informations d'attribut comportent des informations de protection pour, à la fois, interdire et permettre le traitement de réduction des données vidéo, les informations de protection étant réinscriptibles en fonction d'une entrée de l'utilisateur à travers ladite unité d'entrée (3), et dans lequel les données vidéo ayant les informations de protection pour interdire le traitement de réduction ne sont jamais réduites.

9. Appareil d'enregistrement vidéo tel que défini dans la revendication 3, dans lequel le traitement de réduction supprime les données vidéo.

10. Appareil d'enregistrement vidéo tel que défini dans la revendication 3, dans lequel le traitement de réduction compresse les données vidéo à un taux supérieur à celui des données vidéo qui sont stockées à présent.

11. Appareil d'enregistrement vidéo tel que défini dans la revendication 1, dans lequel les informations d'attribut sont retenues dans une table différente des données vidéo.

12. Appareil d'enregistrement vidéo tel que défini dans la revendication 1, dans lequel les informations d'attribut sont retenues en tant qu'en-tête des données vidéo.
